# EUROPEAN PATENT APPLICATION

(11) **EP 3 179 273 A1**
(43) Date of publication of application: **14.06.2017**
(21) Application number: 16195693.3
(22) Date of filing: 26.10.2016
(51) Int. Cl.: G01S 17/89, G01S 7/483, G01S 17/10, G01S 7/481, G01S 7/486

(54) **LIGHT DETECTION AND RANGING (LIDAR) IMAGING SYSTEMS AND METHODS**

(30) Priority: 09.12.2015 US 201514963307
(71) Applicant: The Boeing Company, Chicago, IL 60606-1596 (US)
(72) Inventor: Jungwirth, Douglas R., Chicago, IL 60606-1596 (US)
(74) Representative: Duxbury, Stephen

(57) **Abstract**

An imaging system is configured to form images of a target based on a plurality of reflected light signals. The imaging system may include a light transmission assembly configured to transmit a plurality of light signals towards the target. Each of the plurality of light signals has a unique characteristic that differs from the other of the plurality of light signals. A light detector assembly is configured to receive and detect the plurality of light signals reflected from the target and distinguish each of the plurality of light signals based on the unique characteristic of each of the plurality of light signals.

## Description

### FIELD OF THE INVENTION

The present invention relates to systems and methods of imaging long range targets, such as Light Detection and Ranging (LIDAR) systems and methods.

### BACKGROUND

LIDAR represents a sensing method that may be used to detect surface features of a target, such as various areas on the surface of the Earth. A typical LIDAR system includes a laser, a scanner, and a detector. The laser emits light pulses that are used to measure distances with respect to various areas of a particular target. The scanner moves the light pulses over the surface of the target. The light pulses reflect off the target and are received by the detector. The reflected light pulses received at the detector are used to generate three-dimensional information about the surface shape and area of the target.

A typical LIDAR system includes a single scanner that moves emitted light pulses over an area of interest that includes a target. A time of flight of each reflected light pulse is determined, as well as angles at which the light pulses were scanned. The combination of the time of flight and the scan angles are used to generate a three-dimensional image of the target within the area of interest.

In general, the scanner includes a single beam steering element and optical elements. The LIDAR system receives a reflected laser pulse at the detector before emitting a subsequent laser pulse. In particular, a known LIDAR system includes a laser transmitter that transmits a laser pulse. Before the transmitter emits a subsequent laser pulse, a detector first receives the initially-transmitted laser pulse. The LIDAR system monitors the time from transmission to detection to determine a corresponding distance of a target from which the transmitted laser pulse reflected. As noted, however, the known LIDAR system operates such that only a single laser pulse is out (that is, between transmission and detection) at any one time.

Known systems that use time of flight as a measurement of distance from a transmitter to a target are generally limited by the time it takes for a laser pulse to be emitted from a transmitter, travel to the target, and reflect off the target back to a detector to be recorded. The time delay between an initial laser pulse and a subsequent laser pulse limits system performance. For example, if a target is 200 feet away, the time it takes for a laser pulse to travel from a transmitter to the target and back to a detector is approximately 400 nanoseconds. As such, the fastest that the system is able to sample the target is about 2.5 MHz. If, for example, an imaging frame includes 1000 X 1000 pixels, the frame rate is about 2.5 frames per second. If the imaging frame is 250 X 250 pixels, the frame rate increased to about 40 frames per second, but at a reduced spatial resolution. As the target is further away, the reduction in frame rate and spatial resolution diminishes even more.

### SUMMARY OF THE INVENTION

A need exists for a faster and more efficient imaging system and method that form three-dimensional images based on reflected light signals. A need exists for an imaging system that maintains a high frame rate and spatial resolution. A need exists for an imaging system and method having an increased frame rate and resolution in a time of flight imaging system.

With those needs in mind, the present invention provides an imaging system that is configured to form images of a target based on a plurality of reflected light signals. The imaging system may include a light transmission assembly configured to transmit a plurality of light signals towards the target. Each of the plurality of light signals has a unique characteristic that differs from the other of the plurality of light signals. A light detector assembly is configured to receive and detect the plurality of light signals reflected from the target and distinguish each of the plurality of light signals based on the unique characteristic of each of the plurality of light signals. The imaging system may be a Light Detection and Ranging (LIDAR) system configured to form images of a target based on a plurality of reflected laser signals.

The unique characteristic may include a unique wavelength. The unique characteristic may include a unique packet size.

The light transmission assembly may transmit each of the plurality of light signals before a first one of the plurality of light signals is received by the light detector assembly. Preferably no two light signals having the same unique characteristic are en route between the light transmission assembly and the light detector assembly at the same time.

Each of the plurality of light signals may be transmitted from the light transmission assembly along a common optical axis. The transmitter assembly may be configured to multiplex the plurality of light signals into a common beam.

The light transmission assembly may include a plurality of light transmitters. Each of the plurality of light transmitters may be configured to transmit a respective one of the plurality of light signals.

The light detector assembly may include a plurality of light detectors. Each of the plurality of light detectors may be configured to receive a respective one of the plurality of light signals.

The light transmission assembly may include a plurality of filters that are configured to filter the plurality of light signals so that each of the plurality of light signals exhibits the unique characteristic. In at least one embodiment, one or both of the light detector assembly and the light detector assembly may include a plurality of dichroic mirrors. Each of the plurality of dichroic mirrors may be configured to reflect a particular wavelength of light.

The light transmission assembly may include a dispersive combiner that is configured to re-direct the plurality of light signals along a common optical axis. The light transmission assembly may include a laser light source, a laser gain medium, a full reflector, and a partial reflector. The full reflector may be moveable relative to the partial reflector to vary a separation distance between the full reflector and the partial reflector. Varying the separation distance changes the unique characteristic.

The light detector assembly may include a dispersive element or a diffractive element. Each of the dispersive element and the diffractive element may be configured to divert each of the plurality of light signals to a respective detector.

The present invention provides an imaging method configured to form images of a target based on a plurality of reflected light signals. The imaging method may include transmitting a plurality of light signals towards the target, wherein each of the plurality of light signals has a unique characteristic that differs from the other of the plurality of light signals, detecting the plurality of light signals reflected from the target, and distinguishing each of the plurality of light signals based on the unique characteristic of each of the plurality of light signals.

### BRIEF DESCRIPTION OF THE DRAWINGS

Figure 1 illustrates a schematic block diagram of an imaging system, according to the present invention.
Figure 2 illustrates a schematic diagram of an imaging system, according to the present invention.
Figure 3 illustrates a schematic diagram of a light transmission assembly, according to the present invention.
Figure 4 also illustrates a schematic diagram of a light transmission assembly, according to the present invention.
Figure 5 illustrates a schematic diagram of a light detector assembly, according to the present invention.
Figure 6 also illustrates a schematic diagram of a light detector assembly, according to the present invention.
Figure 7 illustrates a flow chart of a method of imaging a target with a plurality of light signals, according to the present invention.

### DETAILED DESCRIPTION

The foregoing summary, as well as the following detailed description of the present invention will be better understood when read in conjunction with the appended drawings. As used herein, an element or step recited in the singular and preceded by the word "a" or "an" should be understood as not necessarily excluding the plural of the elements or steps. Further, references to "one embodiment" are not intended to be interpreted as excluding the existence of additional embodiments that also incorporate the recited features. Moreover, unless explicitly stated to the contrary, embodiments "comprising" or "having" an element or a plurality of elements having a particular condition may include additional elements not having that condition.

The present invention provides an imaging system that may include a light transmission assembly that is configured to transmit a plurality of light signals (such as pulsed lasers). Each of the light signals may have a characteristic that is unique from the other light signals. In at least one embodiment, each light signal may be transmitted at a particular wavelength. For example, a first light signal may be transmitted at a first wavelength, while a second light signal may be transmitted at a second wavelength that differs from the first wavelength. The imaging system may also include a light detector assembly that receives the light signals reflected from a target. The light detector assembly is configured to differentiate the received light signals based on the unique characteristics. For example, the light detector assembly may be configured to differentiate the received light signals based on different wavelengths. As such, each of the plurality of light signals may be transmitted before the light detector assembly receives at least one of the reflected light signals. After the light detector assembly receives the first light signal having a first unique characteristic, the transmitter assembly may then transmit another of the first light signals having the first unique characteristic toward the target even though the other light signals having different unique characteristics may still be en route (for example, in flight) between the light transmission assembly and the light detector assembly.

The target may be a significant distance from the imaging system. For example, the target may be a long range target that may be hundreds of feet, miles, or more from the imaging system. The target may be a natural or manmade structure. For example, the target may be a feature of a landscape, such as a plain, a hill, a mountain, a body of water, a natural landmark or formation, or the like. As another example, the target may be a manmade object, such as a building, vehicle, road, portion of a railway, monument, and/or the like.

The present invention provides a three-dimensional imaging system (such as a LIDAR system) that may transmit a plurality of distinct light signals (such as laser pulses). The distinct light signals may be multiplexed into a common beam. The distinct light signals may be distinguished as they are received by one or more detectors by their particular wavelength differences.

Instead of using a single light source that emits light signals having the same characteristics, a single light source may be used to generate light signals having multiple discrete wavelengths. Alternatively, multiple light sources may be used to generate multiple light signals having discrete wavelengths. The emitted light signals may be aligned with respect to a single optical axis. The light signals may be spaced closer in time (and distance) as compared to known systems, thereby providing a faster system having increased frame rates and resolution.

Certain embodiments of the present disclosure provide an imaging system that may include at least one light source, and a control unit (such as a timing circuit) configured to record a pulse initiation and return time. The light source(s) is configured to generate a plurality of distinct light signals (such as laser pulses), each of which may have at least one unique characteristic (such as a unique wavelength) that differentiates it from the other light signals. The light signals may be multiplexed into a common beam. One or more detectors may be configured to differentiate the received light signals based on the unique characteristic(s).

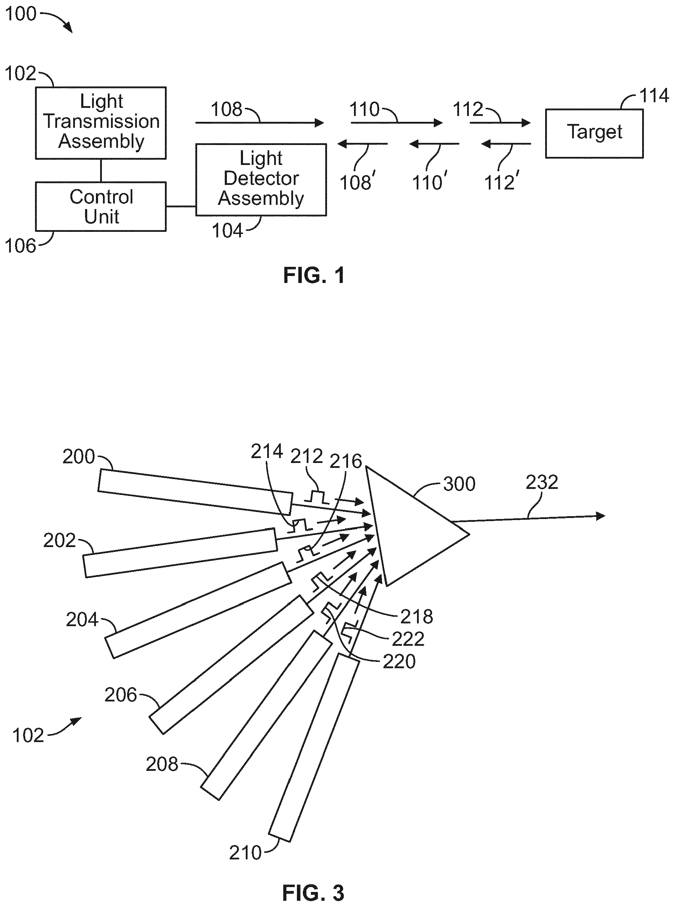

Figure 1 illustrates a schematic block diagram of an imaging system 100, according to the present invention

. The imaging system 100 includes a light transmission assembly 102 and a light detector assembly 104. A control unit 106 may be operatively coupled to the light transmission assembly 102 and the light detector assembly 104 such as through one or more wired and/or wireless connections. The control unit 106 may be configured to control operation of the light transmission assembly 102 and the light detector assembly 104. For example, the control unit 106 may include a timing circuit that is configured to control transmission of light signals (such as pulsed lasers) from the light transmission assembly 102. Optionally, instead of a control unit that is separate and distinct from the light transmission assembly 102 and the light detector assembly 104, one or both of the light transmission assembly 102 and the light detector assembly 104 may include a control unit that is configured to control operation of the imaging system 100. The imaging system 100 may be a three-dimensional (3D) imaging system, such as a LIDAR system.

The light transmission assembly 102 may include one or more light sources, such as one or more laser sources, that are configured to emit multiple light signals 108, 110, and 112 (such as pulsed lasers). Each light signal 108, 110, and 112 has at least one characteristic that is unique from that of the other light signals 108, 110, and 112. For example, each light signal 108, 110, 112 may be transmitted at a unique wavelength. As such, the first light signal 108 may be transmitted at a first wavelength. The second light signal 110 may be transmitted at a second wavelength that differs from the first wavelength. The third light signal 112 may be transmitted at a third wavelength that differs from the first and second wavelengths. Because the wavelengths are different, each of the first, second, and third light signals 108, 110, and 112 may have a different color. For example, the first light signal 108 may be a blue light signal, the second light signal 110 may be a yellow light signal, and the third light signal 112 may be a red light signal. In at least one other embodiment, the wavelengths of the light signals 108, 110, 112 may vary such that each of the light signals may be a different shade of a similar color. For example, the first light signal 108 may be dark red, the second light signal 110 may be intermediate red, and the third light signal 112 may be light red.

Each of the light signals 108, 110, and 112 may differ in terms of a packet size, length, or the like. For example, the first light signal 108 may be a single light packet (for example, a single laser pulse). The second light signal 110 may be two separate light packets (for example, two laser pulses separated by less than 1 nanosecond). The third light signal 112 may be three separate light packets (for example, three laser pulses, separated by less than 1 nanosecond). In at least one other embodiment, the first light signal 108 may be a light emission that extends over a first duration of time (for example, a laser emission that last 1 nanosecond). The second light signal 110 may be a light emission that extends over a second duration of time that is shorter or longer than the first duration of time (for example, a laser emission that lasts 2 nanoseconds). The third light signal 112 may be a light emission that extends over a third duration of time that is shorter or longer than the first and second durations of time (for example, a laser emission that lasts 3 nanoseconds).

The light transmission assembly 102 may be configured to transmit more or less light signals than shown. It is to be understood that the light signals 108, 110, and 112 shown in Figure 1 are merely exemplary. The light transmission assembly 102 may be configured to transmit six or more light signals, each having at least one unique characteristic.

The light detector assembly 104 may include one or more detectors that are configured to receive light signals 108', 110', and 112' that represent the light signals 108, 110, and 112, respectively, as reflected from a target 114. The light detector assembly 104 is configured to distinguish and differentiate the light signals 108', 110', and 112' based on their unique characteristics. For example, the light detector assembly 104 receives the light signal 108' and recognizes it as having a first unique characteristic (such as a first wavelength).

The light detector assembly 104 receives the second light signal 110' and recognizes it as having a second unique characteristic (such as a second wavelength) that differs from the first unique characteristic, and is therefore able to differentiate the second light signal 110' from the first light signal 108'. Similarly, the light detector assembly 104 receives the first light signal 112' and recognizes it as having a third unique characteristic (such as a third wavelength) that differs from both the first and second unique characteristics, and is therefore able to differentiate the third light signal 112' from the first and second light signals 108' and 110'.

In operation, the light transmission assembly 102 is configured to transmit the plurality of light signals 108, 110, and 112 (each having at least one unique characteristic) towards the target 114. For example, the control unit 106 may operate the light transmission assembly 102 to transmit the light signals 108, 110, and 112 towards the target 114. The light signals 108, 110, and 112 may be emitted from the light transmission assembly 102 along the same optical axis, and may be manipulated and directed as in 3D imaging systems, such as LIDAR systems.

The light transmission assembly 102 may transmit the light signals 108, 110, and 112 before the light detector assembly 104 detects any (or at least one) of the reflected light signals 108', 110', and 112'. For example, the light transmission assembly 102 does not need to wait until the reflected light signal 108' is detected by the light detector assembly 104 to transmit the light signal 110.

As or after the light detector assembly 104 receives the reflected light signal 108', the control unit 106 may then operate the light transmission assembly 102 to transmit a subsequent light signal 108 having the same unique characteristic as the initially transmitted light signal 108. Similarly, as or after the light detector assembly 104 receives the reflected light signal 110', the control unit 106 may then operate the light transmission assembly 102 to transmit a subsequent light signal 110 having the same unique characteristic as the initially transmitted light signal 110. Further, as or after the light detector assembly 104 receives the reflected light signal 112', the control unit 106 may then operate the light transmission assembly 102 to transmit a subsequent light signal 112 having the same unique characteristic as the initially transmitted light signal 112. As such, the control unit 106 may control timing of the transmitted light signals 108, 110, and 112 based on whether particular light signals are en route (for example, in flight) between the light transmission assembly 102 and the light detector assembly 104. Multiple light signals having the same unique characteristic may not be in flight (that is, en route between the light transmission assembly 102 and the light detector assembly 104) at the same time. In this manner, the control unit 106 may accurately determine the distance of the target 114 from the light transmission assembly 102 based on the unique characteristic of each light signal 108, 110, and 112 without interference that may otherwise be caused by multiple light signals having the same characteristics.

As described above, the control unit 106 may be used to control operation of the imaging system 100. As used herein, the term "control unit," "unit," "central processing unit," "CPU," "computer," or the like may include any processor-based or microprocessor-based system including systems using microcontrollers, reduced instruction set computers (RISC), application specific integrated circuits (ASICs), logic circuits, and any other circuit or processor including hardware, software, or a combination thereof capable of executing the functions described herein. Such are exemplary only, and are thus not intended to limit in any way the definition and/or meaning of such terms. For example, the control unit 106 may be or include one or more processors that are configured to control operation of the imaging system 100.

The control unit 106 is configured to execute a set of instructions that are stored in one or more storage elements (such as one or more memories), in order to process data. For example, the control unit 106 may include or be coupled to one or more memories. The storage elements may also store data or other information as desired or needed. The storage elements may be in the form of an information source or a physical memory element within a processing machine.

The set of instructions may include various commands that instruct the control unit 106 as a processing machine to perform specific operations such as the methods and processes of the various embodiments of the subject matter described herein. The set of instructions may be in the form of a software program. The software may be in various forms such as system software or application software. Further, the software may be in the form of a collection of separate programs, a program subset within a larger program or a portion of a program. The software may also include modular programming in the form of object-oriented programming. The processing of input data by the processing machine may be in response to user commands, or in response to results of previous processing, or in response to a request made by another processing machine.

The diagrams of embodiments herein may illustrate one or more control or processing units, such as the control unit 106. It is to be understood that the processing or control units may represent circuits, circuitry, or portions thereof that may be implemented as hardware with associated instructions (e.g., software stored on a tangible and non-transitory computer readable storage medium, such as a computer hard drive, ROM, RAM, or the like) that perform the operations described herein. The hardware may include state machine circuitry hardwired to perform the functions described herein. Optionally, the hardware may include electronic circuits that include and/or are connected to one or more logic-based devices, such as microprocessors, processors, controllers, or the like. Optionally, the control unit 106 may represent processing circuitry such as one or more of a field programmable gate array (FPGA), application specific integrated circuit (ASIC), microprocessor(s), and/or the like. The circuits in various embodiments may be configured to execute one or more algorithms to perform functions described herein. The one or more algorithms may include aspects of embodiments disclosed herein, whether or not expressly identified in a flowchart or a method.

As used herein, the terms "software" and "firmware" are interchangeable, and include any computer program stored in memory for execution by a computer, including RAM memory, ROM memory, EPROM memory, EEPROM memory, and nonvolatile RAM (NVRAM) memory. The above memory types are exemplary only, and are thus not limiting as to the types of memory usable for storage of a computer program.

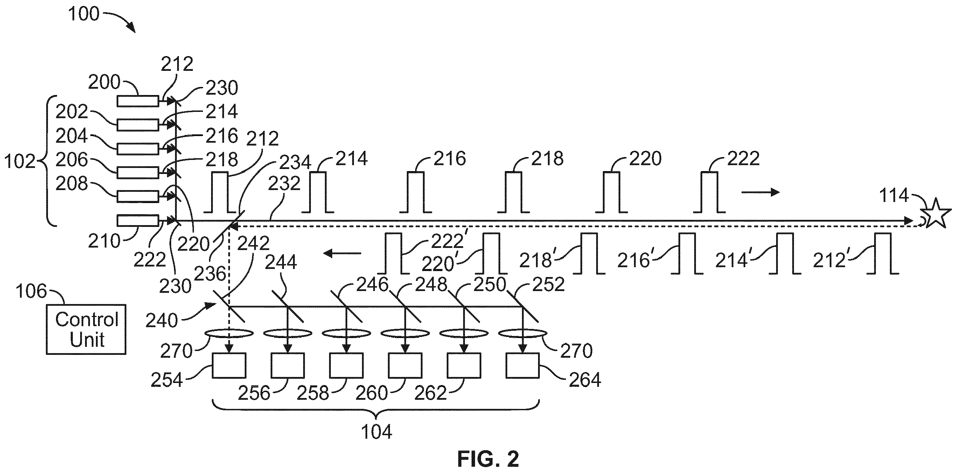

Figure 2 illustrates a schematic diagram of the imaging system 100, according to the present invention. The light transmission assembly 102 may include a plurality of light transmitters (such as pulsed laser transmitters) 200, 202, 204, 206, 208, and 210. Each light transmitter 200, 202, 204, 206, 208, and 210 is configured to generate and emit a light signal having a unique characteristic. For example, the light transmitter 200 may emit a first light signal 212 having a first wavelength corresponding to a first color. The second light transmitter 202 may emit a second light signal 214 having a second wavelength corresponding to a second color. The second wavelength and the second color differ from the first wavelength and the first color. The third light transmitter 204 may emit a third light signal 216 having a third wavelength corresponding to a third color. The third wavelength and the third color differ from the first and second wavelengths and the first and second colors. The fourth light transmitter 206 may emit a fourth light signal 218 having a fourth wavelength corresponding to a fourth color. The fourth wavelength and the fourth color differ from the first, second, and third wavelengths and the first, second, and third colors. The fifth light transmitter 208 may emit a fifth light signal 220 having a fifth wavelength corresponding to a fifth color. The fifth wavelength and the fifth color differ from the first, second, third, and fourth wavelengths and the first, second, third, and fourth colors. The sixth light transmitter 210 may emit a sixth light signal 222 having a sixth wavelength corresponding to a sixth color. The sixth wavelength and the sixth color differ from the first, second, third, fourth, and fifth wavelengths and the first, second, third, fourth, and fifth colors.

Alternatively, instead of the unique characteristics being different wavelengths, the unique characteristics may be various other types of characteristics. For example, the unique characteristics may represent differences in light packet bursts, sizes, durations, and/or the like.

The light transmission assembly 102 may also include a plurality of reflectors 230 associated with the light transmitters 200-210. The reflectors 230 are configured to reflect the emitted light signals 212-222 and align them along a common optical axis 232 towards the target 114. The reflectors 230 may be used to multiplex the separate and distinct light signals 212-222 into a common beam path along the common optical axis 232. As noted, each of the light signals 212-222 may be tuned to a different wavelength (and therefore color). The reflectors 230 may be or include a plurality of dichroic beam splitters that are used to emit the light signals 212-222 along the common optical axis 232.

The emitted light signals 212-222 may pass through an aperture 234 of a reflector 236 (such as a mirror) towards the target 114. The emitted light signals 212-222 reflect off the target 114 as reflected light signals 212', 214', 216', 218', 220', and 222'. The reflected light signals 212'-222' reflect off the reflector 236 towards the light detector assembly 104.

The light detector assembly 104 may include a splitter sub-assembly 240 having a plurality of dichroic mirrors 242, 244, 246, 248, 250, and 252, each of which is associated and aligned with a respective detector 254, 256, 258, 260, 262, and 264. Each detector 254-264 is configured to detect a particular wavelength of light associated with a particular reflected light signal 212'-222'. Each dichroic mirror 242-252 is configured to reflect only a particular wavelength light signal towards a respective detector 254-264, while allowing other light signals to pass therethrough. For example, the dichroic mirror 242 is configured to reflect the light signal 212' (and allow the other light signals to pass therethrough), while the detector 254 is configured to detect the light signal 212'. The other dichroic mirrors 244-252 and the detectors 256-264 are similarly tuned to a particular wavelength of light. The light detector assembly 104 may also include lenses 270 configured to focus the reflected light signals 212'-222' into the respective detectors 254-264. Alternatively, the light detector assembly 104 may not include the lenses 270.

The dichroic mirrors 242-252 may each have a reflectivity notch or band. The reflected light signals may be reflected through a linear path of the dichroic mirrors 242-252, such that each dichroic mirror 242-252 reflects a particular wavelength of light into a particular detector 254-264.

Optionally, instead of dichroic mirrors, the splitter sub-assembly 240 may include one or more filters tuned to a particular wavelength. Each particular detector 254-264 may be associated with a respective filter.

The control unit 106 determines when each detector 254-264 receives a respective reflected light signal. After the control unit 106 determines that a particular reflected light signal has been detected by a respective detector, the control unit 106 may operate the light transmission assembly 102 to emit an associated light signal. For example, when the control unit 106 determines that the detector 254 has received the reflected light signal 212', the control unit 106 may cause the light transmitter 200 to emit another light signal 212.

Each of the light signals 212-222 may be transmitted at a different time. For example, the light signal 222 may be transmitted first, followed by the light signal 220, followed by the light signal 218, followed by the light signal 216, followed by the light signal 214, and followed by the light signal 212. All of the light signals 212-222 may be in flight (that is, en route between the transmitter assembly 102 and the light detector assembly 104) at the same time. In at least one embodiment, multiple light signals having the same unique characteristic may not be in flight at the same time. For example, two light signals 212 may not be in flight at the same time, so as to reduce possible signal interference and ambiguity.

Alternatively, instead of the light transmission assembly 102 having separate and distinct transmitters, the light transmission assembly 102 may include a single transmitter that is configured to generate the plurality of light signals 212-222. In at least one embodiment, a single transmitter may modulate an output to generate the different light signals 212-222. Also, alternatively, the light detector assembly 104 may include a single detector that is configured to recognize the different characteristics as the reflected signals 212'-222' are received.

Figure 3 illustrates a schematic diagram of the light transmission assembly 102, according to an embodiment of the present disclosure. The light transmission assembly 102 may include a dispersive combiner 300, such as an optical wedge, diffraction grating, or the like, that is configured to receive the light signals 212-222, each of which may impinge upon the dispersive combiner 300 at a different angle, and re-direct each of the light signals 212-222 along the common optical axis 232. Each of the light transmitters 200-210 may be aligned with respect to a specific entry angle into the dispersive combiner 300.

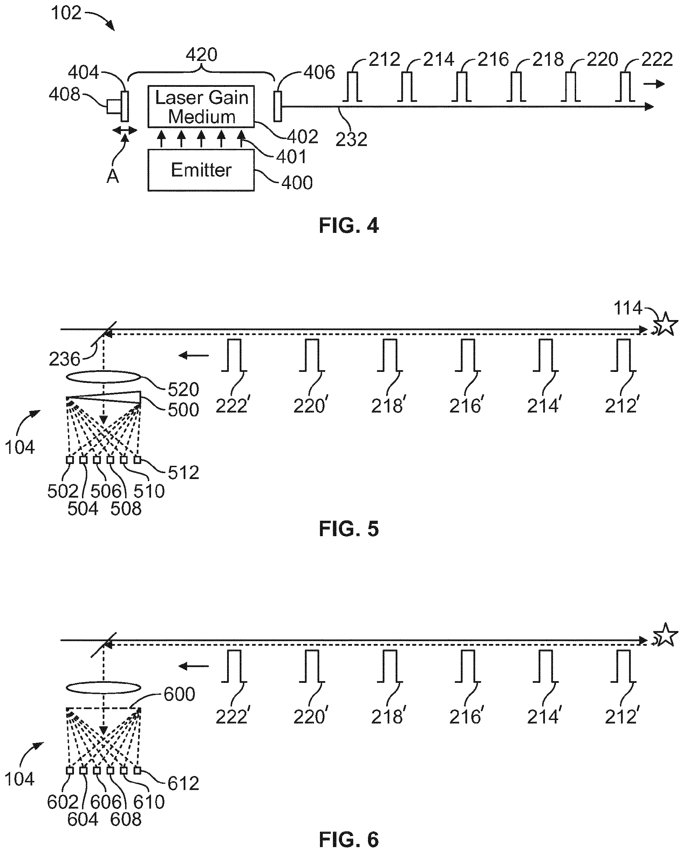

Figure 4 illustrates a schematic diagram of the light transmission assembly 102, according to the present invention. The light transmission assembly 102 may include a light source 400 that is configured to emit light signals 401 into a laser gain medium 402, such as a gas, plasma, and/or the like. A full reflector 404 and a partial reflector 406 may be at opposite sides of a cavity containing the laser gain medium 402. One or both of the full reflector 404 and the partial reflector 406 may be operatively coupled to an actuator 408 (such as a motor) that is configured to move the full reflector 404 relative to the partial reflector 406. For example, the full reflector 404 may be moved in the direction of arrows A along the optical axis 232 to change the size of the cavity that contains the laser gain medium 402. By changing the distance of the cavity, the wavelengths of the light signals 401 are changed, thereby producing the different light signals 212-222. The reflectors 404 and 406 may oscillate or otherwise move at a set frequency and displacement. During such movement, the laser gain medium 402 is energized and a light signal 401 is emitted therein. The wavelength of the resulting light signal depends on the spacing 420 between the reflectors 404 and 406. As the spacing 420 changes (such as from pulse to pulse of the light signals 401), the specific wavelength of a resulting laser pulse changes accordingly. As such, the light transmission assembly 102 shown in Figure 4 is configured to generate a series of laser pulses having specific, repeatable, and distinct wavelengths.

As an example, a separation distance 420 between the reflectors 404 and 406 of 1.00 micron may generate a light signal having a first wavelength. As the separation distance 420 is increased to 1.01 microns, the resulting light signal has a second wavelength that differs from the first wavelength.

Figure 5 illustrates a schematic diagram of the light detector assembly 104, according to the present invention. The light detector assembly 104 may include a dispersive element 500, such as a prism, and a plurality of detectors 502, 504, 506, 508, 510, and 512. Each detector 502-512 is positioned at a focus of a dispersed light path from the dispersive element 500. The dispersive element 500 disperses the received light signals 212'-222' to the detectors 502-512 at respective locations. The light detector assembly 104 may also include a lens 520 that focuses the light signals into the dispersive element 500. Alternatively, the light detector assembly 104 may not include the lens 520.

Figure 6 illustrates a schematic diagram of the light detector assembly 104 according to the present invention. The light detector assembly 104 may include a diffractive element 600, such as a phase grating, amplitude grating, holographic optical element, or the like. The diffractive element 600 is configured to diffract and divert the particular light signals 212'-222' to particular associated detectors 602, 604, 606, 608, 610, and 612.

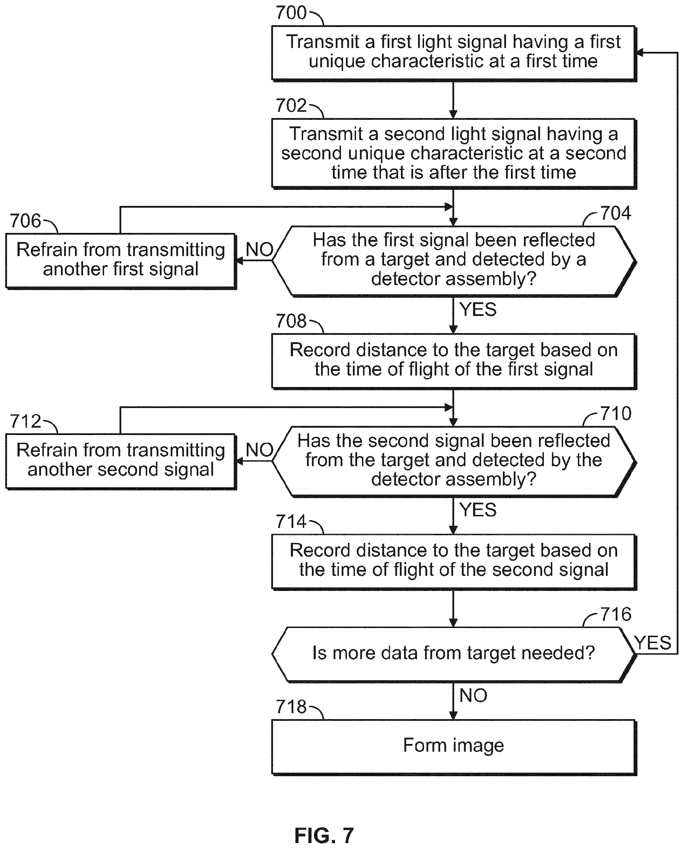

Figure 7 illustrates a flow chart of a method of imaging a target with a plurality of light signals, according to the present invention. The control unit 106 (shown in Figures 1 and 2) may operate the imaging system 100 (shown in Figures 1 and 2) according to the flow chart of Figure 7.

The method begins at 700, in which a first light signal (such as a first pulsed laser) having a first unique characteristic (such as a unique wavelength) is transmitted towards a target to be imaged at a first time. At 702, a second light signal having a second unique characteristic that differs from the first unique characteristic is transmitted towards the target at a second time that is after the first time. The first and second light signals may both be en route between a transmitter assembly and a detector assembly before either of the first and second light signals is detected by the detector assembly.

At 704, it is determined if the first signal has been reflected from the target and detected by the detector assembly. If the first signal has not been detected, then the method proceeds to 706, in which the method refrains from transmitting another first signal. Then method then returns to 704. If, however, the first signal has been detected, the method proceeds from 704 to 708, in which the distance to the target is recorded based on the time of flight of the first signal.

At 710, it is determined if the second signal has been reflected from the target and detected by the detector assembly. If the second signal has not been detected, then the method proceeds to 712, in which the method refrains from transmitting another second signal. Then method then returns to 710. If, however, the second signal has been detected, the method proceeds from 710 to 714, in which the distance to the target is recorded based on the time of flight of the second signal.

At 716, it is determined if more data from the target is needed. For example, more data may be needed to form an image and/or to account for a real time position of the target. If more data is needed, the method returns to 700 from 716. If, however, more data is not needed, the method proceeds from 716 to 718, in which an image is formed.

Notably, the method may include transmission and detection of more than two light signals. For example, embodiments of the present disclosure may transmit and detect three, four, five, six, seven, or more light signals, each of which may include a unique characteristic that differs from the other signals.

As described above, the present invention provides fast and efficient imaging systems, such as LIDAR systems, that are used to image a target based on reflected light signals. The present invention provides imaging systems and methods that maintain a high frame rate and spatial resolution.

While various spatial and directional terms, such as top, bottom, lower, mid, lateral, horizontal, vertical, front and the like may be used to describe embodiments of the present disclosure, it is understood that such terms are merely used with respect to the orientations shown in the drawings. The orientations may be inverted, rotated, or otherwise changed, such that an upper portion is a lower portion, and vice versa, horizontal becomes vertical, and the like.

As used herein, a structure, limitation, or element that is "configured to" perform a task or operation is particularly structurally formed, constructed, or adapted in a manner corresponding to the task or operation. For purposes of clarity and the avoidance of doubt, an object that is merely capable of being modified to perform the task or operation is not "configured to" perform the task or operation as used herein.

## Claims

1. An imaging system configured to form images of a target based on a plurality of reflected light signals, the imaging system comprising:
a light transmission assembly configured to transmit a plurality of light signals towards the target, wherein each of the plurality of light signals has a unique characteristic that differs from the other of the plurality of light signals; and
a light detector assembly configured to receive and detect the plurality of light signals reflected from the target and distinguish each of the plurality of light signals based on the unique characteristic of each of the plurality of light signals.

2. The imaging system of claim 1, wherein the light transmission assembly transmits each of the plurality of light signals before a first one of the plurality of light signals is received by the light detector assembly.

3. The imaging system of claims 1 or 2, wherein no two light signals having a same one of the unique characteristic are en route between the light transmission assembly and the light detector assembly at the same time.

4. The imaging system of any of the claims 1-3, wherein each of the plurality of light signals is transmitted from the light transmission assembly along a common optical axis.

5. The imaging system of any of the preceding claims, wherein the light transmission assembly comprises a plurality of light transmitters, wherein each of the plurality of light transmitters is configured to transmit a respective one of the plurality of light signals,
and/or
wherein the light detector assembly comprises a plurality of light detectors, wherein each of the plurality of light detectors is configured to receive a respective one of the plurality of light signals.

6. The imaging system of any of the preceding claims, wherein the light transmission assembly comprises a plurality of filters that are configured to filter the plurality of light signals so that each of the plurality of light signals exhibits the unique characteristic.

7. The imaging system of any of the preceding claims, wherein one or both of the light detector assembly and the light detector assembly comprises a plurality of dichroic mirrors, wherein each of the plurality of dichroic mirrors is configured to reflect a particular wavelength of light.

8. The imaging system of any of the preceding claims, wherein the light transmission assembly comprises a dispersive combiner that is configured to re-direct the plurality of light signals along a common optical axis.

9. The imaging system of any of the preceding claims wherein the light transmission assembly comprises:
a laser light source;
a laser gain medium;
a full reflector; and
a partial reflector, wherein the full reflector is moveable relative to the partial reflector to vary a separation distance between the full reflector and the partial reflector, and wherein varying the separation distance changes the unique characteristic.

10. The imaging system of any of the preceding claims, wherein the light detector assembly comprises one of a dispersive element or a diffractive element that is configured to divert each of the plurality of light signals to a respective detector.

11. An imaging method configured to form images of a target based on a plurality of reflected light signals, the imaging method comprising:
transmitting a plurality of light signals towards the target, wherein each of the plurality of light signals has a unique characteristic that differs from the other of the plurality of light signals;
detecting the plurality of light signals reflected from the target; and
distinguishing each of the plurality of light signals based on the unique characteristic of each of the plurality of light signals.

12. The imaging method of claim 11 with one or more of the following:
• wherein the unique characteristic comprises a unique wavelength,
• wherein the transmitting operation comprises transmitting each of the plurality of light signals before a first one of the plurality of light signals is detected,
• wherein the transmitting operation comprises transmitting each of the plurality of light signals along a common optical axis,
• wherein the transmitting operation comprises filtering the plurality of light signals so that each of the plurality of light signals exhibits the unique characteristic.

13. The imaging method of claim 11 or 12, with one or more of the following:
• wherein one or both of the transmitting or detecting operations comprises using a plurality of dichroic mirrors to reflect a particular wavelength of light,
• wherein the transmitting operation comprises re-directing the plurality of light signals along a common optical axis using a dispersive combiner,
• wherein the transmitting operation comprises varying a separation distance between a full reflector and a partial reflector on opposite sides of a laser gain medium to change the unique characteristic,
• wherein the detecting operation comprises diverting each of the plurality of light signals to a respective detector through one of a dispersive element or a diffractive element.

14. Use of an imaging system according to any of the claims 1-10, in an imaging method of any of the claims 11-13.
